# EUROPÄISCHE PATENTSCHRIFT

(11) **EP 0 627 092 B1**
(45) Veröffentlichungstag und Bekanntmachung des Hinweises auf die Patenterteilung: **22.10.1997**
(21) Anmeldenummer: 93903999.6
(22) Anmeldetag: 19.02.1993
(51) Int. Cl.: G02B 6/44

(54) **LICHTLEITFASER**
OPTICAL FIBRE
FIBRE OPTIQUE

(30) Priorität: 21.02.1992 DE 9202296 U
(43) Veröffentlichungstag der Anmeldung: 07.12.1994
(73) Patentinhaber: Rofin Sinar Laser GmbH, 22113 Hamburg (DE)
(72) Erfinder: ROOS, Sven-Olov, D-2000 Hamburg 65 (DE); DINGER, Reinhold, D-2056 Glinde (DE); LUDEWIGT, Klaus, D-2000 Oststeinbek (DE)
(74) Vertreter: Tergau, Enno, Dipl.-Ing.
(86) Internationale Anmeldenummer: EP9300404
(87) Internationale Veröffentlichungsnummer: WO9317360

(56) Entgegenhaltungen:
- EP-A- 0 034 670
- EP-A- 0 261 484
- EP-A- 0 354 452
- DE-A- 2 527 769
- GB-A- 2 125 180
- PATENT ABSTRACTS OF JAPAN vol. 9, no. 250 (P-394)8. Oktober 1985 & JP-A-60 101 503 (SHOWA DENSON DENRAN) 5. Juni 1985

## Beschreibung

Die Erfindung bezieht sich auf eine Lichtleitfaser zur Übertragung von Laserstrahlung hoher Leistung.

Zur Materialbearbeitung mit Laserstrahlung hoher Leistung, beispielsweise beim Schneiden und beim Schweißen, wird auch die von einem Nd:YAG-Laser im optischen Wellenlängenbereich emittierte Laserstrahlung verwendet. Der Vorteil bei der Verwendung eines Nd:YAG-Lasers besteht dann unter anderem darin, daß die Laserstrahlung von einer Lichtleitfaser zum Werkstück übertragen werden kann. Durch eine Zerstörung der Lichtleitfaser, beispielsweise einen Bruch bei einer übermäßigen oder sich häufig wiederholenden Biegebeanspruchung, besteht die Gefahr, daß Laserstrahlung aus der Lichtleitfaser in die Umgebung austritt und dort Schäden verursacht. Es ist deshalb erforderlich, den Zustand dieser Lichtleitfaser ständig zu überwachen und beim Auftreten eines Defektes die in die Lichtleitfaser eintretende Laserstrahlung wegzuschalten.

Zum Überwachen des Zustandes einer in einer optischen Übertragungsstrecke angeordneten Lichtleitfaser sind eine Reihe von Einrichtungen und Verfahren bekannt, die auf optischer Grundlage arbeiten. So ist beispielsweise aus der WO 91/17015 eine Einrichtung bekannt, bei der in die Lichtleitfaser zusätzlich zum energiereichen Laserlicht ein Licht mit einer anderen Wellenlänge eingekoppelt wird, das am Ende der Übertragungsstrecke reflektiert und von einer in der Nähe des Lasers angeordneten Empfangseinrichtung empfangen wird. Bei einem Bruch der Lichtfaser ist die Intensität des von der Empfangseinrichtung empfangenen reflektierten Lichtes verringert und führt zu einem Abschalten oder Abblenden des energiereichen Laserlichtes. Die genannte Einrichtung ist aber wegen der zusätzlichen optischen Komponenten relativ aufwendig und kostenintensiv.

Zur Überwachung des Zustandes einer Lichtleitfaser ist es außerdem bekannt, die Lichtleitfaser an ihrem Außenumfang mit einem Metalldraht zu versehen, der zwischen der Lichtleitfaser und einem auf die Lichtleitfaser aufgeschobenen Kabelmantel angeordnet ist. Bei einem Bruch der Lichtleitfaser bricht dann auch dieser Metalldraht. Der Bruch des Metalldrahts kann über eine elektrische Widerstandsmessung erfaßt werden. Es hat sich jedoch gezeigt, daß ein teilweiser oder vollständiger Bruch der Lichtleitfaser nicht in allen Fällen auch zu einem Bruch des Metalldrahtes führt, so daß die Überwachung des elektrischen Widerstandes des Metalldrahtes eine verlässliche Aussage über den Zustand der Lichleitfaser nicht ermöglicht. Eine ähnliche Anordnung ist aus der Schrift JP-A-60-101 503 bekannt. Hier ist der Metalldraht auf einem Gewebeband angeordnet, welches um den Lichtleiter gewickelt ist.

Für die optische Nachrichtenübertragung sind bespielsweise aus der DE-A1-25 27 769 Lichtleitfasern bekannt, die eine unmittelbar auf der Glasfaser aufgebrachte Metallschicht enthalten. Diese Metallschicht wird unmittelbar nach der Herstellung der Glasfaser aufgetragen und dient zugleich als Schutzschicht für die Glasfaser beim nachträglichen Aufbringen einer Kunststoffmantelschicht. Die Metallschicht dient in erster Linie zum Schutz der Glasfaser gegen Feuchtigkeit. Als weiterer Vorteil dieser bekannten Lichtleitfaser wird angegeben, daß die Metallschicht auch eine elektrische Messung eines Fehlerortes in der Lichtleitfaser ermöglicht.

Lichtleitfasern, bei denen zum Schutz der innenliegenden Glasfaser direkt auf den aus Glas bestehenden Mantel (cladding) eine metallische Schicht aufgebracht wird, sind beispielsweise auch aus den US-Patentschriften 3 083 550, 4 893 895 sowie aus den deutschen Offenlegungsschriften 2 556 786, 2 735 079, 2 704 821 und 2 826 010 bekannt. Dabei ist im Stand der Technik auch vorgeschlagen worden, die metallische Schutzschicht auch zum Übertragen elektrischer Nutzsignale zu verwenden.

Diese bekannten Lichtleitfasern sind somit durch ihre metallische Beschichtung zwar gut zur Überwachung der Glasfaser auf Bruch geeignet, Es hat sich jedoch insbesondere bei Anwendungen, bei denen die Lichtleitfaser ständig wechselnden Biegebelastungen ausgesetzt ist, also insbesondere bei der Führung von Laserstrahlen zu einem beweglichen Bearbeitungskopf bei der Bearbeitung eines Werkstückes, herausgestellt, daß die bekannten metallisch beschichteten Lichtleitfasern eine gegenüber den üblicherweise verwendeten, beispielsweise aus der US-A-5 015 068 bekannten Lichtleitfasern, die zwischen der Glasfaser und einer Kunststoffschutzschicht keine metallische Schicht enthalten. deutlich verringerte Bruchfestigkeit aufweisen.

Die bekannten metallisch beschichteten Lichtleitfasern sind somit zwar gut zur Überwachung auf Bruch geeignet, ihr Einsatz ist jedoch nur bei festverlegten Kabeln sinnvoll. die keiner dauernd wechselnden Biegebelastung unterworfen sind.

Der Erfindung liegt nun die Aufgabe zugrunde, eine Lichtleitfaser anzugeben. deren Zustand einfach und sicher überwacht werden kann und die auch bei häufiger Biegebeanspruchung eine hohe Standzeit gewährleistet.

Die genannte Aufgabe wird gemäß der Erfindung gelöst mit den Merkmalen des Anspruches 1. Eine Lichtleitfaser gemäß der Erfindung enthält
a) eine Glasfaser mit einem Faserkern und einem Fasermantel,
b) wenigstens eine auf dem Fasermantel angeordnete Zwischenschicht aus einem Polymer,
c) eine auf der Zwischenschicht angeordnete metallische Schicht sowie
d) Mittel zum Schutz der metallischen Schicht vor einer mechanischen Zerstörung durch Abrieb.

Da die Zwischenschicht der Lichtleitfaser mit einer dünnen metallischen Schicht versehen ist, führt jede übermäßige Biegebeanspruchung oder jeder Bruch des Faserkerns auch zu einer zumindest teilweisen Zerstörung dieser metallischen Schicht. Diese Zerstörung kann dann über eine elektrische Widerstandsmessung erfaßt werden. Da außerdem die metallische Schicht auf einer aus einem polymeren Werkstoff bestehenden Zwischenschicht angeordnet ist, ist die Bruchfestigkeit gegenüber einer Lichtfaser, bei der die metallische Schicht direkt auf der Glasfaser angeordnet ist, deutlich erhöht.

Dabei wird die aus dem Faserkern (core) und dem Fasermantel (cladding) austretende Laserstrahlung in der zwischen dem Fasermantel und der metallischen Schicht liegenden Zwischenschicht absorbiert und führt bereits bei geringfügigen Schäden in der Glasfaser zu einer lokalen Aufheizung, die ihrerseits zu einer teilweisen Zerstörung der metallischen Schicht auch dann führt, wenn die mechanische Belastung bei einer Biegebeanspruchung der Lichtleitfaser noch nicht zu einem Bruch oder einem Aufreißen der Metallschicht geführt hat.

Aus der US-A-4 889 400 sind zwar Lichtleitfasern bekannt, bei denen eine metallische Schicht auf eine die Glasfaser umgebende Schutzschicht eines Kunststoffes aufgebracht ist. Diese bekannte Lichtleitfaser ist aber für einen anderen Verwendungszweck konzipiert. Die metallische Schicht hat bei dieser Faser nämlich die Aufgabe, die Glasfaser vor Zerstörung durch von außen auftretende Laserstrahlung zu schützen. Zu diesem Zweck muß der Außenmantel der Lichtleitfaser mit einer reflektierenden Schicht versehen sein. Eine derartige Lichtleitfaser ist jedoch für den Einsatz zur Lichtübertragung zwischen einem Laser und einem Bearbeitungskopf, beispielsweise einem Schweißkopf, nicht geeignet, da sie mechanischen Belastungen nicht standhält, die von außen auf sie einwirken.

In einer bevorzugten Ausgestaltung einer Lichtleitfaser gemäß der Erfindung ist eine zweilagige Zwischenschicht vorgesehen, bei der zwischen einer Schutzschicht und dem Fasermantel eine weitere Hilfsschicht angeordnet, die aus einem Polymer besteht, dessen Elastizitätsmodul kleiner ist als der Elastizitätsmodul der ebenfalls aus einem Polymer bestehenden Schutzschicht. Dadurch wird die Lichtleitfaser gegen Schäden, die durch sogenanntes Microbending entstehen, besser schützt.

Vorzugsweise beträgt die Schichtdicke der metallischen Schicht zwischen 0,1 µm und 5 µm.

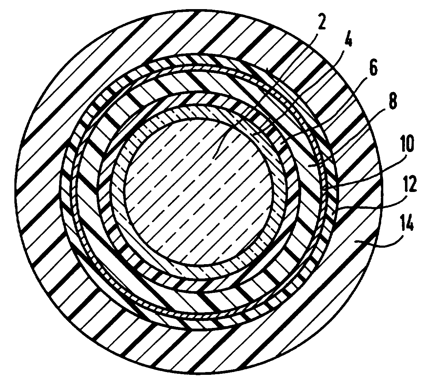

Zur weiteren Erläuterung der Erfindung wird auf die Zeichnung verwiesen, in deren einziger Figur ein bevorzugtes Ausführungsbeispiel einer Lichtleitfaser gemäß der Erfindung in einem Schnitt veranschaulicht ist.

Entsprechend der Figur enthält eine Lichtleitfaser gemäß der Erfindung eine aus Quarzglas bestehende Glasfaser, die einen ebenfalls aus Quarzglas bestehenden Faserkern 2 umfaßt, um den ein Fasermantel 4 angeordnet ist. Der Faserkern 2 und der Fasermantel 4 sind in ihren Brechungsindizes so aufeinander abgestimmt, daß das sich im Faserkern 2 ausbreitende Licht an der Grenzfläche zum Fasermantel 4 totalreflektiert wird (Stufenindex-Faser) oder im Faserkern 2 von der Grenzfläche weggebeugt wird (Gradientemindex-Faser) und den Faserkern 2 nicht verläßt. Typische Werte für den Durchmesser des Faserkerns 2 einer verwendeten Mehr-Moden-Faser sind 200 µm - 1000 µm. Die Schichtdicke des Fasermantels 4 beträgt dann etwa 20 µm - 200 µm.

Der Fasermantel 4 ist mit einer Hilfsschicht 6 aus Kunststoff versehen, auf der eine ebenfalls aus Kunststoff bestehende Schutzschicht 8 (coating) angeordnet ist. Die Hilfs- oder Bufferschicht 6 besteht vorzugsweise aus einem weichen Polymer mit niedrigem Elastizitätsmodul, beispielsweise ein Polymer auf Silikonbasis, um die Glasfaser vor Mikrokrümmungen zu schützen.

Die Schutzschicht 8 hat im wesentlichen die Funktion, die Lichtleitfaser mechanisch zu schützen und ihre Festigkeit und Längssteifigkeit zu erhöhen. Geeignet sind polymere Werkstoffe mit einem gebenüber der Bufferschicht 6 höheren Elastizitätsmodul, beispielsweise Polyamid. Entsprechend aufgebaute Lichtleitfasern können beispielsweise von der Firma Fiber Guide Industries oder der Firma Ceram Optec GmbH bezogen werden.

Auf die Schutzschicht 8 ist gemäß der Erfindung eine dünne metallische Schicht 10 aufgebracht, die konzentrisch um den Faserkern 2 angeordnet ist, und mit deren Hilfe der Zustand der Lichtleitfaser überwacht werden kann. Im Beispiel der Figur ist die metallische Schicht 10 nochmals durch eine zusätzliche Schutzschicht 12, beispielsweise aus einem UV-härtbaren Klebstoff (Vitralit 6172 oder Pearl-Paint-Lack) vor mechanischem Abrieb geschützt.

Die metallische Schicht 10 hat vorzugsweise eine Dicke zwischen 0,1 µm und 5µm, insbesondere eine Dicke von etwa 0,4 µm, und kann beispielsweise durch einen Aufdampfvorgang auf die darunterliegende Schutzschicht 8 aufgebracht sein. Als Metalle sind beispielsweise Gold (Au), Silber (Ag), insbesondere Aluminium (Al) geeignet. Um eine gute Haftung der metallischen Schicht 10 auf der Schutzschicht 8 zu erhalten, ist es zweckmäßig, die Faser vor dem Aufdampfen des Metalls zur Aktivierung ihrer Oberfläche einer elektrischen Entladung zu unterziehen.

In der Schutzschicht 8 wird bei einem durch Biegebeanspruchung entstandenen geringfügigen Schaden im Bereich des Faserkerns 2 oder des Fasermantels 4 die aus dem Fasermantel 4 austretende Leckstrahlung absorbiert und verursacht dort eine starke lokale Aufheizung, die ihrerseits zu einer Zerstörung der dünnen metallischen Schicht 10 führt. Bei Versuchen hat sich herausgestellt, daß bereits innerhalb einer Millisekunde nach Bruch der Glasfaser die Metallschicht 10 ebenfalls meßbar beschädigt wird. Dabei zerfällt die Metallschicht 10 im Bereich des Bruches durch eine hohe Erwärmung in kleine, voneinander getrennte Inseln mit Durchmessern in der Größenordnung von etwa 10 µm. Bei Versuchen hat sich auch ergeben, daß eine vollständige metallische Beschichtung des Umfangs nicht zwingend notwendig ist. Eine nur teilweise Beschichtung des Umfangs der Schutzschicht 8, beispielsweise wenn die Lichtleitfaser bedampft wird, während sie einlagig auf einer zylindrischen Rolle aufgewickelt ist, wobei zwangsläufig der auf der Rolle aufliegende Teil der Lichtleitfaser unbeschichtet bleibt, hat sich für die meisten Fälle als ausreichend ergeben.

Die Dicke der Hilfsschicht 6 und der Schutzschicht 8 darf dabei nicht zu groß sein, um eine Zerstörung der metallischen Schicht auch bei geringfügigen Schäden in der Glasfaser sicherzustellen. Als günstig haben sich Schichtdicken von jeweils etwa 50 µm erwiesen.

Die in der Figur dargestellte Lichtleitfaser ist außerdem in einen Kabelmantel 14, beispielsweise aus PVC, eingebaut, der einen zusätzlichen optischen Schutz bei Bruch der Faser bietet und die metallische Schicht 10 auch in einer Ausführungsform ohne direkt aufgetragene Schutzschicht 12 vor mechanischen Abrieb schützt.

Die Überwachung der Lichtleitfaser erfolgt vorzugsweise mit einer Einrichtung zum Erfassen des elektrischen Widerstandes der sich über die gesamte Länge der Lichtleitfaser erstreckenden metallischen Schicht 10. Durch diese Einrichtung kann beispielsweise eine im Strahlengang der Laserstrahlung vor deren Eintritt in die Lichtleitfaser angeordnete Verschlußblende angesteuert werden, mit der die Laserstrahlung weggeschaltet werden kann, wenn der Widerstand der Schicht 10 einen vorgegebenen Grenzwert überschreitet.

## Patentansprüche

1. Einrichtung zur Übertragung von Laserstrahlung hoher Leistung, mit einer Lichtleitfaser, die eine Glasfaser mit einem Faserkern (2) und einem Fasermantel (4) enthält, die mit wenigstens einer Zwischenschicht (6,8) aus einem Polymer versehen ist, die den Fasermantel (4) umhüllt, wobei auf der äußeren Oberfläche der Zwischenschicht (6,8) eine metallische Schicht (10) angeordnet ist, die mit Mitteln (12,14) zum Schutz dieser metallischen Schicht (10) vor einer mechanischen Zerstörung durch Abrieb versehen ist, und wobei zum Überwachen des Zustandes der Lichtleitfaser Mittel zum Erfassen des elektrischen Widerstandes der metallischen Schicht (10) vorgesehen sind.

2. Einrichtung nach Anspruch 1, wobei die Zwischenschicht (6, 8) eine auf dem Fasermantel (4) angeordnete Hilfsschicht (6) aus einem weichen Polymer enthält, auf der eine ebenfalls aus einem Polymer bestehende Schutzschicht (8) angeordnet ist, deren Elastizitätsmodul größer ist als der Elastizitätsmodul der Hilfsschicht (6).

3. Einrichtung nach Anspruch 1 oder 2, wobei die Mittel (12, 14) zum Schutz der metallischen Schicht (10) eine zusätzliche Schutzschicht (12) umfassen, die auf die metallische Schicht (10) aufgebracht ist.

4. Einrichtung nach einem der Ansprüche 1 bis 3, wobei die Schichtdicke der metallischen Schicht (10) zwischen 0,1 µm und 5 µm beträgt.

5. Einrichtung nach einem der Ansprüche 1 bis 4, wobei eine Schutzeinrichtung vorgesehen ist, die betätigt wird, wenn der elektrische Widerstand einen vorgegebenen Grenzwert überschreitet.

6. Einrichtung nach Anspruch 5, wobei die Schutzeinrichtung eine Blende umfaßt, die in den Strahlengang der Laserstrahlung einbringbar ist.

7. Verwendung einer Lichtleitfaser zur Übertragung von Laserstrahlung hoher Leistung, die eine Glasfaser mit einem Faserkern (2) und einem Fasermantel (4) enthält, die mit wenigstens einer Zwischenschicht (6,8) aus einem Polymer versehen ist, die den Fasermantel (4) umhüllt, wobei auf der äußeren Oberfläche der Zwischenschicht (6,8) eine metallische Schicht (10) angeordnet ist, und die mit Mitteln (12,14) zum Schutz dieser metallischen Schicht (10) vor einer mechanischen Zerstörung durch Abrieb versehen ist, und wobei zum Überwachen des Zustandes der Lichtleitfaser die Erfassung des elektrischen Widerstandes der metallischen Schicht (10) vorgesehen ist.

## Claims

1. Device for transmitting high-power laser radiation, having an optical fibre, which comprises a glass fibre having a fibre core (2) and a fibre cladding (4), which optical fibre is provided with at least one intermediate layer (6, 8), which consists of a polymer and envelops the fibre cladding (4), with there being arranged on the outer surface of the intermediate layer (6, 8) a metallic layer (10), which optical fibre is provided with means (12, 14) for protecting this metallic layer (10) from mechanical destruction by abrasion, and with means for detecting the electrical resistance of the metallic layer (10) being provided in order to monitor the state of the optical fibre.

2. Device according to claim 1, with the intermediate layer (6, 8) comprising an auxiliary layer (6), which consists of a soft polymer and is arranged on the fibre cladding (4) and on which is arranged a protective layer (8), which likewise consists of a polymer and the modulus of elasticity of which is greater than the modulus of elasticity of the auxiliary layer (6).

3. Device according to claim 1 or 2, with the means (12, 14) for protecting the metallic layer (10) comprising an additional protective layer (12), which is deposited onto the metallic layer (10).

4. Device according to one of the claims 1 to 3, with the layer thickness of the metallic layer (10) amounting to between 0.1 µm and 5 µm.

5. Device according to one of the claims 1 to 4, with there being provided a protective device, which is activated if the electrical resistance exceeds a predetermined limiting value.

6. Device according to claim 5, with the protective device comprising a diaphragm which can be brought into the beam path of the laser radiation.

7. Use of an optical fibre for transmitting high-power laser radiation, which optical fibre comprises a glass fibre having a fibre core (2) and a fibre cladding (4), which optical fibre is provided with at least one intermediate layer (6, 8), which consists of a polymer and envelops the fibre cladding (4), with there being arranged on the outer surface of the intermediate layer (6, 8) a metallic layer (10), and which optical fibre is provided with means (12, 14) for protecting this metallic layer (10) from mechanical destruction by abrasion, and with the detection of the electrical resistance of the metallic layer (10) being provided in order to monitor the state of the optical fibre.

## Revendications

1. Dispositif de transmission d'un rayonnement laser de grande puissance, comportant une fibre optique, qui comprend une fibre de verre ayant un coeur (2) et une gaine (4), et est munie d'au moins une couche intermédiaire (1, 6) en un polymère, laquelle entoure la gaine (4) de la fibre, une couche (10) métallique, qui est munie de moyens (12, 14) pour protéger cette couche métallique (10) d'une destruction mécanique par abrasion, étant prévue sur la surface extérieure de la couche intermédiaire (6, 8), et des moyens de détection de la résistance électrique de la couche métallique (10) étant prévus pour contrôler l'état de la fibre optique.

2. Dispositif suivant la revendication 1, dans lequel la couche intermédiaire (6, 8) comprend une couche auxiliaire en un polymère souple, qui est prévue sur la gaine (4) de la fibre et sur laquelle est prévue une couche (8) de protection également constituée d'un polymère, dont le module d'élasticité est plus grand que le module d'élasticité de la couche auxiliaire (6).

3. Dispositif suivant la revendication 1 ou 2, dans lequel les moyens (12, 14) de protection de la couche métallique (10) comprennent une couche de protection (12) supplémentaire, qui est mise en place sur la couche métallique (10).

4. Dispositif suivant l'une des revendications 1 à 3, dans lequel l'épaisseur de la couche métallique (10) est comprise entre 0,1 µm et 5 µm.

5. Dispositif suivant l'une des revendications 1 à 4, dans lequel il est prévu un dispositif de protection qui est actionné lorsque la résistance électrique devient supérieure à une valeur limite prescrite.

6. Dispositif suivant la revendication 5, dans lequel le dispositif de protection comprend une ouverture qui peut être mise en place dans le trajet du rayonnement laser.

7. Utilisation d'une fibre optique pour la transmission d'un rayonnement laser de grande puissance, qui comprend une fibre de verre ayant un coeur (2) et une gaine (4) et est munie d'au moins une couche intermédiaire (6, 8) en un polymère, laquelle entoure la gaine (4) de la fibre, une couche métallique (10), qui est munie des moyens (12, 14) pour protéger cette couche métallique (10) d'une destruction mécanique par abrasion, étant prévue sur la surface extérieure de la couche intermédiaire (6, 8) et la détection de la résistance électrique de la couche métallique (10) étant prévue pour contrôler l'état de la fibre optique.
